# EUROPEAN PATENT SPECIFICATION

(11) **EP 3 569 113 B1**
(45) Date of publication and mention of the grant of the patent: **14.04.2021**
(21) Application number: 18185473.8
(22) Date of filing: 25.07.2018
(51) Int. Cl.: A47J 31/00

(54) **VEHICLE-MOUNTED COFFEE MAKER WITH HEATING FUNCTION AND HIGH-VOLTAGE EXTRACTION FUNCTION**
FAHRZEUGMONTIERTE KAFFEEMASCHINE MIT HEIZFUNKTION UND HOCHSPANNUNGS-EXTRAKTIONSFUNKTION
CAFETIÈRE MONTÉE SUR VÉHICULE DOTÉE D'UNE FONCTION DE CHAUFFAGE ET D'UNE FONCTION D'EXTRACTION HAUTE TENSION

(30) Priority: 14.05.2018 CN 201810457237
(43) Date of publication of application: 20.11.2019
(73) Proprietor: Ningbo Dangwu Intelligent Technology Co., Ltd., Henghe Town Cixi City, Zhejiang (CN)
(72) Inventor: SHI, Junda, Yuyao City, Zhejiang (CN); SHI, Zhongyu, Yuyao City, Zhejiang (CN); LIU, Shukuo, Yuyao City, Zhejiang (CN); LUO, Yue, Yuyao City, Zhejiang (CN)
(74) Representative: Schmid, Nils T.F.

(56) References cited:
- EP-A1- 3 298 932
- WO-A1-2015/173125
- CN-U- 205 493 554
- FR-A1- 2 579 880
- US-A1- 2006 107 839

## Description

### TECHNICAL FIELD

The present invention relates to the technical field of vehicle-mounted coffee makers, and in particular to a vehicle-mounted coffee maker with a heating function and a high-voltage extraction function.

### BACKGROUND

Coffee is able to promote the metabolic mechanism, and has effects of resisting oxidization, protecting the heart, strengthening muscles and bones, benefiting the waist and knees, promoting the appetite, removing fat and food retention, disinhibiting orifices and dehumidifying, activating blood circulation, dissipating stasis, calming wind, relieving convulsion and the like. Studies have shown that drinking 100 mg to 200 mg of caffeine per day is sufficient to refresh the human body without any harm to the human body. Capsule coffee makers are a kind of novel coffee makers proposed in recent years. For the so-called capsule coffee makers, coffee powder is filled in a plastic capsule in advance by the manufacturer, and nitrogen is then fed into the plastic capsule for preserving the coffee powder. When a person wants to drink coffee, he or she can quickly drink a cup of fragrant coffee by placing a capsule into the capsule coffee maker.

However, a conventional vehicle-mounted coffee maker realizes the heating function by an electric heater, and thus has a large floor space and a low heating speed. Moreover, due to the absence of a high-voltage water pump, the conventional coffee maker cannot automatically extract coffee. The document EP 3 298 932 A1 discloses a portable beverage machine.

### SUMMARY

An objective of the present invention is to provide a vehicle-mounted coffee maker with a heating function and a high-voltage extraction function, which has a small floor space and a high heating speed and solves the problem that a vehicle-mounted espresso machine cannot automatically extract coffee.

For this purpose, the present invention provides the following solutions.

A vehicle-mounted coffee maker with a heating function and a high-voltage extraction function is provided as described in claim 1.

Optionally, the top cover includes an outer cover, an inner cover, a cover plate, a decorative ring and a cover sealing ring; and
openings are formed in both the center of the outer cover and the center of the inner cover, the top of the inner cover is fixed on the decorative ring within the outer cover through a buckle, the cover sealing ring is embedded into the bottom of the inner cover, and the cover plate is covered on the outer cover.

Optionally, the heating fin is arranged on a heating fin bracket through a heating fin sealing ring, and a sealing ring for a water inlet of a high-voltage DC water pump and a sealing ring for a temperature sensor are further provided on the heating fin bracket.

According to the invention, the high-voltage DC water pump assembly includes an upper water pump bracket, a lower water pump bracket, a heating fin temperature sensor, a high-voltage DC water pump, a water temperature sensor, a sealing ring for the water outlet of the water pump, a control circuit board, a conductive ejector pin, a conductive ejector pin positioning base and a conductive ejector pin compression plate; and
the upper water pump bracket is arranged on the top of the shell, the lower water pump bracket is arranged on the bottom of the shell, the conductive ejector pin is fixedly arranged on the conductive ejector pin positioning base, and the conductive ejector pin positioning base is arranged on the upper water pump bracket; the conductive ejector pin compression plate is connected to the bottom of the conductive ejector pin positioning base through screws; one end of the conductive ejector pin is connected to the heating fin, while the other end thereof is connected to a power supply, so as to conduct electricity to the heating fin; both the heating fin temperature sensor and the water temperature sensor are arranged on the upper water pump bracket; the water outlet of the high-voltage DC water pump is formed on the lower water pump bracket through the sealing ring for the water outlet of the water pump; the control circuit board is arranged on the lower water pump bracket; and, both the heating fin temperature sensor and the water temperature sensor are connected to the control circuit board.

Optionally, the brewing base assembly includes a capsule holder, a puncture needle, a powder box, an anti-ponding sealing ring, a sealing ring for the capsule holder and a brewing base; and
a cavity capable of accommodating a coffee capsule is provided inside the capsule holder, and an opening is formed below the cavity; a water inlet communicated with the cavity is formed on the top of the capsule holder; the puncture needle is fixed on the top of the cavity through a buckle; the sealing ring for the capsule holder is arranged inside the capsule holder; the powder box is arranged below the capsule holder; the anti-ponding sealing ring is mounted on the bottom of the powder box; and, the brewing base is arranged below the powder box.

Optionally, a switch button is provided on the shell; a connecting base is provided on the bottom of the shell; and, the top of the connecting base is in threaded connection to the lower water pump bracket, while the bottom thereof is in threaded connection to the brewing base.

Optionally, the heating fin is a rare earth thick-film heating fin.

Optionally, the high-voltage DC water pump is a 12V high-voltage DC water pump.

In accordance with the specific embodiments of the present invention, the present invention has the following technical effects.

The vehicle-mounted coffee maker with a heating function and a high-voltage extraction function provided by the present invention can automatically pump water and extract coffee and have a small floor space and a high heating speed. The heating is quickened by using a rare earth thick-film heating fin for heating, and the problem that a vehicle-mounted espresso machine cannot automatically extract coffee is solved by using a 12V high-voltage DC water pump. It is convenient to extract coffee by using the 12V high-voltage DC water pump. By connecting the 12V high-voltage DC water pump to a DC 12V or DC 24V power supply, placing a coffee capsule into the coffee maker and adding a proper amount of water, by an one-key operation, the water can be automatically heated, and the high-voltage water pump will automatically pump water and extract coffee when the water temperature reaches a temperature required to brew the coffee.

### BRIEF DESCRIPTION OF THE DRAWING

To describe the technical solutions in the embodiments of the present invention or in the prior art more clearly, the drawings to be used in the description of the embodiments will be briefly described below. Apparently, the drawings described hereinafter are some of the embodiments of the present invention, and a person of ordinary skill in the art can obtain other drawings according to these drawings without paying any creative effort.
Fig. 1 is an overall sectional view of a vehicle-mounted coffee maker with a heating function and a high-voltage extraction function according to embodiments of the present invention;
Fig. 2 is an exploded view of a top cover of the vehicle-mounted coffee maker with a heating function and a high-voltage extraction function according to the embodiments of the present invention;
Fig. 3 is an exploded view of a water tank of the vehicle-mounted coffee maker with a heating function and a high-voltage extraction function according to the embodiments of the present invention;
Fig. 4 is an exploded view of a high-voltage DC water pump assembly of the vehicle-mounted coffee maker with a heating function and a high-voltage extraction function according to the embodiments of the present invention;
Fig. 5 is an exploded view of a shell of the vehicle-mounted coffee maker with a heating function and a high-voltage extraction function according to the embodiments of the present invention; and
Fig. 6 is an exploded view of a brewing base assembly of the vehicle-mounted coffee maker with a heating function and a high-voltage extraction function according to the embodiments of the present invention,
in which:
   201: outer cover; 202: inner cover; 203: cover plate; 204: decorative ring; 205: cover sealing ring; 206: silicone rubber decorative ring; 301: water tank; 302: heating fin; 303: heating fin sealing ring; 304: sealing ring for the temperature sensor; 305: heating fin bracket; 306: a sealing ring for the water inlet of the high-voltage DC water pump; 401: upper water pump bracket; 402: lower water pump bracket; 403: heating fin temperature sensor; 404: high-voltage DC water pump; 405: water temperature sensor; 406: sealing ring for the water outlet of the water pump; 407: control circuit board; 408: conductive ejector pin; 409: conductive ejector pin positioning base; 410: conductive ejector pin compression plate; 411: sealing ring for the lower water pump bracket; 501: shell; 502: switch button; 503: switch button base; 504: connecting base; 505: upper sealing ring for the capsule holder; 506: sealing ring for the capsule holder; 601: capsule holder; 602: puncture needle; 603: powder box; 604: anti-ponding sealing ring; 605: lower sealing ring for the capsule holder; 606: brewing base; 607: coffee capsule; and, 608: coffee cup.

### DETAILED DESCRIPTION

The technical solutions in the embodiments of the present invention will be clearly and completely described as below with reference to the accompanying drawings in the embodiments of the present invention. Obviously, the described embodiments are only a part of, not all of, the embodiments of the present invention.

An objective of the present invention is to provide a vehicle-mounted coffee maker with a heating function and a high-voltage extraction function, which has a small floor space and a high heating speed and uses a 12V high-voltage DC water pump to solve the problem that a vehicle-mounted espresso machine cannot automatically extract coffee.

To make the objectives, features and advantages of the present invention more obvious and comprehensible, the present invention will be further described below in detail by specific implementations with reference to the accompanying drawings.

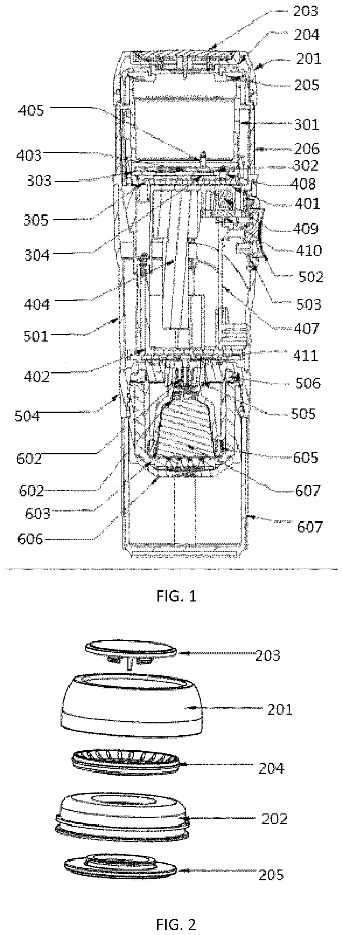

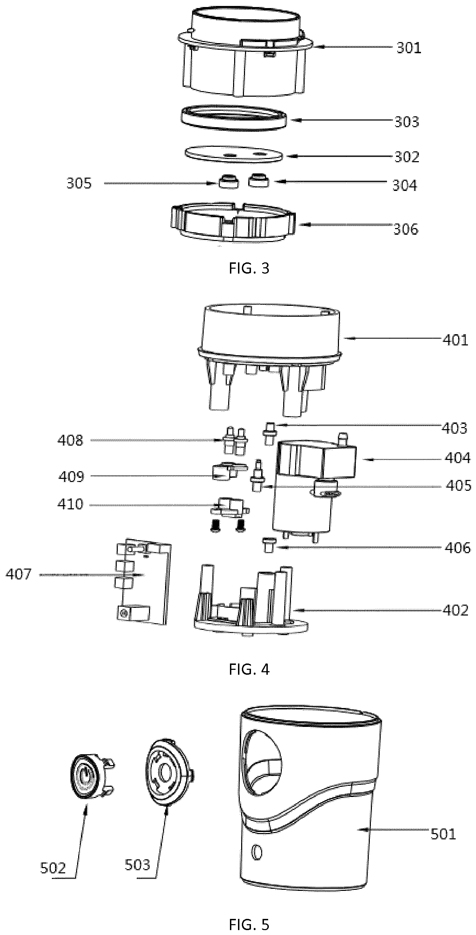

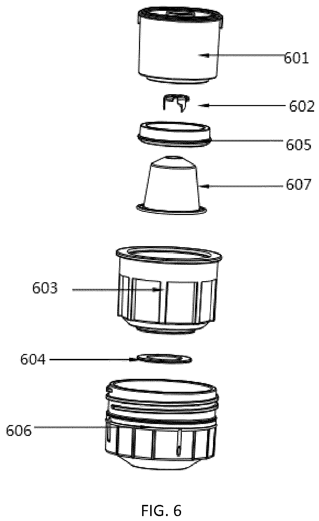

Fig. 1 is an overall sectional view of a vehicle-mounted coffee maker with a heating function and a high-voltage extraction function according to embodiments of the present invention; Fig. 2 is an exploded view of a top cover of the vehicle-mounted coffee maker with a heating function and a high-voltage extraction function according to the embodiments of the present invention; Fig. 3 is an exploded view of a water tank of the vehicle-mounted coffee maker with a heating function and a high-voltage extraction function according to the embodiments of the present invention; Fig. 4 is an exploded view of a high-voltage DC water pump assembly of the vehicle-mounted coffee maker with a heating function and a high-voltage extraction function according to the embodiments of the present invention; Fig. 5 is an exploded view of a shell of the vehicle-mounted coffee maker with a heating function and a high-voltage extraction function according to the embodiments of the present invention; and, Fig. 6 is an exploded view of a brewing base assembly of the vehicle-mounted coffee maker with a heating function and a high-voltage extraction function according to the embodiments of the present invention.

As shown in Figs. 1-6, a vehicle-mounted coffee maker with a heating function and a high-voltage extraction function is provided, including: a top cover, a water tank 301, a heating fin 302, a high-voltage DC water pump assembly, a shell 501, a brewing base assembly and a coffee cup 608.

The top cover is covered on the water tank 301. The heating fin 302 is fixedly arranged below the water tank 301 and connected to the water tank 301 through screws. The shell 501 is arranged below the water tank 301, and the brewing base assembly is arranged below the shell 501. The shell 501 is of a hollow structure having openings on its top and bottom. The high-voltage DC water pump assembly is arranged inside the shell 501. A water inlet of the high-voltage DC water pump assembly is communicated with the water tank 301, and a water outlet thereof is communicated with the brewing base assembly. The coffee cup 608 is arranged below the brewing base assembly.

The top cover includes an outer cover 201, an inner cover 202, a cover plate 203, a decorative ring 204 and a cover sealing ring 205.

Openings are formed in both the center of the outer cover 201 and the center of the inner cover 202. The top of the inner cover 202 is fixed on the decorative ring 204 within the outer cover 201 through a buckle. The cover sealing ring 205 used for preventing water in the water tank from overflowing from the top is embedded into the bottom of the inner cover 202. The cover plate 203 is covered on the outer cover 201.

The heating fin 302 is arranged on a heating fin bracket 305 through a heating fin sealing ring 303, and a sealing ring 306 for a water inlet of a high-voltage DC water pump and a sealing ring 304 for a temperature sensor are further provided on the heating fin bracket 305.

The high-voltage DC water pump assembly includes an upper water pump bracket 401, a lower water pump bracket 402, a heating fin temperature sensor 403, a high-voltage DC water pump 404, a water temperature sensor 405, a sealing ring 406 for the water outlet of the water pump, a control circuit board 407, a conductive ejector pin 408, a conductive ejector pin positioning base 409 and a conductive ejector pin compression plate 410.

The upper water pump bracket 401 is arranged on the top of the shell 501, the lower water pump bracket 402 is arranged on the bottom of the shell 501, the conductive ejector pin 408 is fixedly arranged on the conductive ejector pin positioning base 409, and the conductive ejector pin positioning base 409 is arranged on the upper water pump bracket 401. The conductive ejector pin compression plate 410 is connected to the bottom of the conductive ejector pin positioning base 409 through screws. One end of the conductive ejector pin 408 is connected to the heating fin 302, while the other end thereof is connected to a power supply, so as to conduct electricity to the heating fin 302. Both the heating fin temperature sensor 403 and the water temperature sensor 405 are arranged on the upper water pump bracket 401. The water outlet of the high-voltage DC water pump is formed on the lower water pump bracket 402 through the sealing ring 406 for the water outlet of the water pump, and the sealing ring 406 for the water outlet of the water pump prevents water from overflowing out of the water pump from the water outlet of the water pump. The control circuit board 407 is arranged on the lower water pump bracket 402. Both the heating fin temperature sensor 403 and the water temperature sensor 405 are connected to the control circuit board 407.

The brewing base assembly includes a capsule holder 601, a puncture needle 602, a powder box 603, an anti-ponding sealing ring 604, a sealing ring 506 for the capsule holder and a brewing base 606.

A cavity capable of accommodating a coffee capsule 607 is provided inside the capsule holder 601, and an opening is formed below the cavity. A water inlet communicated with the cavity is formed on the top of the capsule holder 601. The puncture needle 602 is fixed on the top of the cavity through a buckle. The sealing ring 506 for the capsule holder is arranged inside the capsule holder 601, and is used for preventing water from overflowing from the capsule holder during the pumping of water by the water pump. The powder box 603 is arranged below the capsule holder 601. The anti-ponding sealing ring 604 used for avoiding water accumulation on the bottom of the brewing base is mounted on the bottom of the powder box 603. The brewing base 606 is arranged below the powder box 603.

A switch button 502 is provided on the shell 501. A connecting base 504 is provided on the bottom of the shell 501. The top of the connecting base 504 is in threaded connection to the lower water pump bracket 402, while the bottom thereof is in threaded connection to the brewing base 606.

The heating fin 302 is a rare earth thick-film heating fin.

The high-voltage DC water pump 404 is a 12V high-voltage DC water pump.

The operating process of the vehicle-mounted coffee maker with a heating function and a high-voltage extraction function in the embodiments of the present invention is as follow.

The vehicle-mounted coffee maker is connected to a DC12V or DC24V power supply.

The coffee capsule 607 is placed into the vehicle-mounted coffee maker, and a proper amount of water is added in the water tank 301. Then, the switch button 502 on the shell 501 of the coffee maker is pressed down, so that the heating fin 301 begins to heat water in the water tank 301. The heating is stopped when the water is heated to a desired temperature.

The high-voltage DC water pump 404 pumps water from the water tank 301 to the brewing base 606.

The puncture needle 602 punctures the coffee capsule 607 due to the water pressure, so that the automatic extraction of coffee is realized.

In addition, a dry-burning resistant system and a water temperature detection system are further provided in the device of the present invention.

In the present invention, a rare earth thick-film heating fin is used for heating. Compared with the conventional electric heater, the heating fin has a small floor space and a high heating speed. In the present invention, by using a 12V high-voltage DC water pump, the problem that a vehicle-mounted espresso machine cannot quickly and automatically extract coffee is solved.

Although the principle and implementations of the present invention have been described above by specific instances in the present invention, the foregoing description of the embodiments is merely for helping in understanding the method and core idea of the present invention. Meanwhile, various alterations to the specific implementations and applications may come to a person of ordinary skill in the art according to the concept of the present invention, which is defined by the appended claims. In conclusion, the contents of the description shall not be regarded as limitations to the present invention.

### Reference sign list

- 201: outer cover
- 202: inner cover
- 203: cover plate
- 204: decorative ring
- 205: cover sealing ring
- 206: silicone rubber decorative ring
- 301: water tank
- 302: heating fin
- 303: heating fin sealing ring
- 304: sealing ring for the temperature sensor
- 305: heating fin bracket
- 306: a sealing ring for the water inlet of the high-voltage DC water pump
- 401: upper water pump bracket
- 402: lower water pump bracket
- 403: heating fin temperature sensor
- 404: high-voltage DC water pump
- 405: water temperature sensor
- 406: sealing ring for the water outlet of the water pump
- 407: control circuit board
- 408: conductive ejector pin
- 409: conductive ejector pin positioning base
- 410: conductive ejector pin compression plate
- 411: sealing ring for the lower water pump bracket
- 501: shell
- 502: switch button
- 503: switch button base
- 504: connecting base
- 505: upper sealing ring for the capsule holder
- 506: sealing ring for the capsule holder
- 601: capsule holder
- 602: puncture needle
- 603: powder box
- 604: anti-ponding sealing ring
- 605: lower sealing ring for the capsule holder
- 606: brewing base
- 607: coffee capsule
- 608: coffee cup

## Claims

1. A vehicle-mounted coffee maker with a heating function and a high-voltage extraction function, comprising: a top cover, a water tank (301), a heating fin (302), a high-voltage DC water pump assembly, a shell (501), a brewing base assembly and a coffee cup (608), wherein:
the top cover is covered on the water tank; the shell (501) is arranged below the water tank, and the brewing base assembly is arranged below the shell; the shell is of a hollow structure having openings on its top and bottom; the high-voltage DC water pump assembly is arranged inside the shell; a water inlet of the high-voltage DC water pump assembly is communicated with the water tank (301), and a water outlet thereof is communicated with the brewing base assembly; and, the coffee cup (608) is arranged below the brewing base assembly;
**characterized in that** the heating fin (302) is fixedly arranged below the water tank (301) and connected to the water tank through screws, and **in that** the high-voltage DC water pump assembly comprises an upper water pump bracket (401), a lower water pump bracket (402), a heating fin temperature sensor (403), a high-voltage DC water pump (404), a water temperature sensor (405), a sealing ring (406) for the water outlet of the water pump, a control circuit board (407), a conductive ejector pin (408), a conductive ejector pin positioning base (409) and a conductive ejector pin compression plate (410); and the upper water pump bracket (401) is arranged on the top of the shell, the lower water pump bracket is arranged on the bottom of the shell, the conductive ejector pin is fixedly arranged on the conductive ejector pin positioning base, and the conductive ejector pin positioning base is arranged on the upper water pump bracket; the conductive ejector pin compression plate is connected to the bottom of the conductive ejector pin positioning base through screws to compress the ejector pin to avoid the offset of the ejector pin during its ejection; one end of the conductive ejector pin is connected to the heating fin, while the other end thereof is connected to a power supply, so as to conduct electricity to the heating fin; both the heating fin temperature sensor and the water temperature sensor are arranged on the upper water pump bracket; a water outlet is formed on the lower water pump bracket, and the water outlet of the high-voltage DC water pump is connected to the water outlet of the lower water pump bracket through the sealing ring for the water outlet of the water pump; the control circuit board is arranged on the lower water pump bracket; and, both the heating fin temperature sensor and the water temperature sensor are connected to the control circuit board.

2. The vehicle-mounted coffee maker with a heating function and a high-voltage extraction function according to claim 1, wherein the top cover comprises an outer cover (201), an inner cover (202), a cover plate (203), a decorative ring (204) and a cover sealing ring (205); and openings are formed in both the center of the outer cover and the center of the inner cover, the top of the inner cover is fixed on the decorative ring within the outer cover through a buckle, the cover sealing ring is embedded into the bottom of the inner cover, and the cover plate is covered on the outer cover.

3. The vehicle-mounted coffee maker with a heating function and a high-voltage extraction function according to claim 1 or 2, wherein the heating fin (302) is arranged on a heating fin bracket (305) through a heating fin sealing ring (303), and a sealing ring (306) for a water inlet of a high-voltage DC water pump and a sealing ring (304) for a temperature sensor are further provided on the heating fin bracket (305).

4. The vehicle-mounted coffee maker with a heating function and a high-voltage extraction function according to any of claims 1 to 3, wherein the brewing base assembly comprises a capsule holder (601), a puncture needle (602), a powder box (603), an anti-ponding sealing ring (604), a sealing ring (506) for the capsule holder and a brewing base (606); and a cavity capable of accommodating a coffee capsule (607) is provided inside the capsule holder, and an opening is formed below the cavity; a water inlet communicated with the cavity is formed on the top of the capsule holder; the puncture needle is fixed on the top of the cavity through a buckle; the sealing ring for the capsule holder is arranged inside the capsule holder; the powder box is arranged below the capsule holder; the anti-ponding sealing ring is mounted on the bottom of the powder box; and, the brewing base is arranged below the powder box.

5. The vehicle-mounted coffee maker with a heating function and a high-voltage extraction function according to any of claims 1 to 4, wherein a switch button (502) is provided on the shell (501); a connecting base (504) is provided on the bottom of the shell; and, the top of the connecting base (504) is in threaded connection to the lower water pump bracket (402), while the bottom thereof is in threaded connection to the brewing base (606).

6. The vehicle-mounted coffee maker with a heating function and a high-voltage extraction function according to any of claims 1 to 5, wherein the heating fin (302) is a rare earth thick-film heating fin.

7. The vehicle-mounted coffee maker with a heating function and a high-voltage extraction function according to any of claims 1 to 6, wherein the high-voltage DC water pump (404) is a 12V high-voltage DC water pump.

## Patentansprüche

1. Fahrzeugmontierte Kaffeemaschine mit einer Heizfunktion und einer Hochspannungsextraktionsfunktion, umfassend: eine obere Abdeckung, einen Wassertank (301), eine Heizrippe (302), eine Hochspannungs-DC-Wasserpumpenanordnung, eine Schale (501), eine Brühbasisanordnung und ein Kaffeebecher (608), wobei:
die obere Abdeckung auf dem Wasserbehälter abgedeckt ist; die Schale (501) unterhalb des Wasserbehälters angeordnet ist, und die Brühbasisanordnung unterhalb der Schale angeordnet ist; die Schale aus einer hohlen Struktur mit Öffnungen an ihrer Oberseite und Unterseite ist; die Hochspannungs-DC-Wasserpumpenanordnung im Inneren der Schale angeordnet ist; ein Wassereinlass der Hochspannungs-DC-Wasserpumpenanordnung mit dem Wassertank (301) verbunden ist, und ein Wasserauslass davon mit der Brühbasisanordnung verbunden ist; und der Kaffeebecher (608) unterhalb der Brühbasisanordnung angeordnet ist;
**dadurch gekennzeichnet, dass** die Heizrippe (302) fest unter dem Wassertank angeordnet und mit dem Wassertank (301) durch Schrauben verbunden ist, und, dass die Hochspannungs-DC-Wasserpumpenanordnung eine obere Wasserpumpenhalterung (401), eine untere Wasserpumpenhalterung (402), einen Heizrippentemperatursensor (403), eine Hochspannungs-DC-Wasserpumpe (404), einen Wassertemperatursensor (405), einen Dichtungsring (406) für den Wasserauslass der Wasserpumpe, eine Steuerplatine (407), einen leitenden Auswerferstift (408), eine leitende Auswerferstiftpositionierungsbasis (409) und eine leitende Auswerferstiftkompressionsplatte (410) umfasst; und
die obere Wasserpumpenhalterung (401) auf der Oberseite der Schale angeordnet ist, die untere Wasserpumpenhalterung auf der Unterseite des Gehäuses angeordnet ist, der leitende Auswerferstift fest auf der leitenden Auswerferstiftpositionierungsbasis angeordnet ist und die leitende Auswerferstiftpositionierungsbasis auf der oberen Wasserpumpenhalterung angeordnet ist; die leitende Auswerferstiftkompressionsplatte mit der Unterseite der leitenden Auswerferstiftpositionierungsbasis durch Schrauben verbunden ist, um den Auswerferstift zu komprimieren, um den Versatz des Auswerferstifts während seines Auswerfens zu vermeiden; ein Ende des leitenden Auswerferstifts mit der Heizrippe verbunden ist, während das andere Ende davon mit einer Leistungsversorgung verbunden ist, um Strom zur Heizrippe zu leiten; sowohl der Heizrippentemperatursensor als auch der Wassertemperatursensor auf der oberen Wasserpumpenhalterung angeordnet sind; ein Wasserauslass auf der unteren Wasserpumpenhalterung ausgebildet ist und der Wasserauslass der Hochspannungs-DC-Wasserpumpe mit dem Wasserauslass der unteren Wasserpumpenhalterung durch den Dichtring für den Wasserauslass der Wasserpumpe verbunden ist; die Steuerplatine auf der unteren Wasserpumpenhalterung angeordnet ist; und sowohl der Heizrippentemperatursensor als auch der Wassertemperatursensor mit der Steuerplatine verbunden sind.

2. Fahrzeugmontierte Kaffeemaschine mit einer Heizfunktion und einer Hochspannungsextraktionsfunktion nach Anspruch 1, wobei die obere Abdeckung eine äußere Abdeckung (201), eine innere Abdeckung (202), eine Abdeckplatte (203), einen dekorativen Ring (204) und einen Abdeckungsdichtungsring (205) umfasst; und
Öffnungen sowohl in der Mitte der äußeren Abdeckung als auch in der Mitte der inneren Abdeckung ausgebildet sind, wobei die obere Abdeckung der inneren Abdeckung am dekorativen Ring innerhalb der äußeren Abdeckung durch eine Schnalle befestigt ist, der Abdeckungsdichtungsring in den Boden der inneren Abdeckung eingebettet ist und die Abdeckplatte an der äußeren Abdeckung abgedeckt ist.

3. Fahrzeugmontierte Kaffeemaschine mit einer Heizfunktion und einer Hochspannungsextraktionsfunktion nach Anspruch 1 oder 2, wobei die Heizrippe (302) auf einer Heizrippenhalterung (305) durch einen Heizrippendichtring (303) angeordnet ist und ferner ein Dichtring (306) für einen Wassereinlass einer Hochspannungs-DC-Wasserpumpe und ein Dichtring (304) für einen Temperatursensor auf der Heizrippenhalterung (305) bereitgestellt sind.

4. Fahrzeugmontierte Kaffeemaschine mit einer Heizfunktion und einer Hochspannungsextraktionsfunktion nach einem der Ansprüche 1 bis 3, wobei die Brühbasisanordnung einen Kapselhalter (601), eine Punktionsnadel (602), einen Pulverkasten (603), einen Anti-Pfützenbildungs-Dichtungsring (604), einen Dichtungsring (506) für den Kapselhalter und eine Brühbasis (606)umfasst; und
ein Hohlraum, der in der Lage ist, eine Kaffeekapsel (607) aufzunehmen, in dem Inneren des Kapselhalters bereitgestellt ist, und eine Öffnung unter dem Hohlraum ausgebildet ist; ein mit dem Hohlraum verbundener Wassereinlass an der Oberseite des Kapselhalters ausgebildet ist; die Punktionsnadel an der Oberseite des Hohlraums durch eine Schnalle befestigt ist; der Dichtungsring für den Kapselhalter im Inneren des Kapselhalters angeordnet ist; der Pulverkasten unter dem Kapselhalter angeordnet ist; der Anti-Pfützenbildungs-Dichtungsring an der Unterseite des Pulverkastens angebracht ist; und die Brühbasis unter dem Pulverkasten angeordnet ist.

5. Fahrzeugmontierte Kaffeemaschine mit einer Heizfunktion und einer Hochspannungsextraktionsfunktion nach einem der Ansprüche 1 bis 4, wobei ein Schaltknopf (502) auf der Schale(501) bereitgestellt ist; eine Verbindungsbasis (504) auf dem Boden der Schale bereitgestellt ist; und die Oberseite der Verbindungsbasis (504) mit der unteren Wasserpumpenhalterung (402) in Gewindeverbindung steht, während der Boden davon mit der Brühbasis (606) in Gewindeverbindung steht.

6. Fahrzeugmontierte Kaffeemaschine mit einer Heizfunktion und einer Hochspannungsextraktionsfunktion nach einem der Ansprüche 1 bis 5, wobei die Heizrippe (302) eine Seltenerd-Dickschicht-Heizrippe ist.

7. Fahrzeugmontierte Kaffeemaschine mit einer Heizfunktion und einer Hochspannungsextraktionsfunktion nach einem der Ansprüche 1 bis 6, wobei die Hochspannungs-DC-Wasserpumpe (404) eine 12V-Hochspannungs-DC-Wasserpumpe ist.

## Revendications

1. Cafetière montée sur véhicule avec une fonction de chauffage et une fonction d'extraction à haute tension, comprenant:
un couvercle supérieur, un réservoir d'eau (301), une ailette de chauffage (302), un ensemble de pompe à eau CC à haute tension, une coque (501), un ensemble de base d'infusion et une tasse de café (608), dans lequel : le couvercle supérieur est couvert sur le réservoir d'eau ; la coque (501) est disposée au-dessous du réservoir d'eau, et l'ensemble de base d'infusion est disposé au-dessous de la coque ; la coque est d'une structure creuse ayant des ouvertures sur son dessus et son dessous; l'ensemble de pompe à eau CC à haute tension est disposé à l'intérieur de la coque; une entrée d'eau de l'ensemble de pompe à eau CC à haute tension communique avec le réservoir d'eau (301) et une sortie d'eau de celui-ci est mise en communication avec l'ensemble de base d'infusion; et, la tasse de café (608) est disposée en dessous de l'ensemble de base d'infusion;
**caractérisé en ce que** l'ailette de chauffage (302) est disposée de manière fixe sous le réservoir d'eau (301) et raccordée au réservoir d'eau par des vis, et **en ce que** l'ensemble de pompe à eau CC à haute tension comprend un support supérieur de pompe à eau (401), une base (402) de pompe à eau inférieure, un capteur de température de l'ailette de chauffage (403), une pompe à eau CC à haute tension (404), un capteur de température d'eau Z (405), une bague d'étanchéité (406) pour la sortie d'eau de la pompe à eau, une carte de circuit de commande (407), une broche d'éjection conductrice (408), une base de positionnement de broche d'éjection conductrice (409) et une plaque de compression de broche d'éjection conductrice (410); et le support de pompe à eau supérieur (401) est disposé sur le dessus de la coque, le support de pompe à eau inférieur est disposé sur le fond de la coque, la broche d'éjection conductrice est disposée de manière fixe sur la base de positionnement de broche d'éjecteur conductrice, et la base de positionnement de broche d'éjection conductrice est disposée sur le support supérieur de pompe à eau; la plaque de compression de la broche d'éjection conductrice est raccordée au fond de la base de positionnement de la broche d'éjection conductrice par des vis pour comprimer la broche d'éjection pour éviter le décalage de la broche d'éjection pendant son éjection; une extrémité de la broche d'éjection conductrice est raccordée à l'ailette de chauffage, tandis que l'autre extrémité de celle-ci est raccordée à une alimentation électrique, de manière à conduire l'électricité vers l'ailette de chauffage; le capteur de température des ailettes de chauffage et le capteur de température d'eau sont tous deux disposés sur le support supérieur de la pompe à eau; une sortie d'eau est formée sur le support inférieur de la pompe à eau, et la sortie d'eau de la pompe à eau CC à haute tension est raccordée à la sortie d'eau du support inférieur de la pompe à eau par la bague d'étanchéité pour la sortie d'eau de la pompe à eau; la carte de circuit de commande est disposé sur le support inférieur de la pompe à eau; et le capteur de température des ailettes de chauffage et le capteur de température d'eau sont tous deux connectés à la carte de circuit de commande.

2. Cafetière montée sur véhicule avec une fonction de chauffage et une fonction d'extraction à haute tension selon la revendication 1, dans laquelle le couvercle supérieur comprend un couvercle extérieur (201), un couvercle intérieur (202), une plaque de couverture (203), une bague décorative (204) et une bague d'étanchéité de couvercle (205); et
des ouvertures sont formées à la fois au centre du couvercle extérieur et au centre du couvercle intérieur, le haut du couvercle intérieur est fixé sur la bague décorative à l'intérieur du couvercle extérieur par une boucle, la bague d'étanchéité de couvercle est incorporée dans le bas du couvercle intérieur, et la plaque de couverture est recouverte sur le couvercle extérieur.

3. Cafetière montée sur véhicule avec fonction de chauffage et fonction d'extraction à haute tension selon la revendication 1 ou 2, dans laquelle l'ailette de chauffage (302) est disposée sur un support d'ailette de chauffage (305) par l'intermédiaire d'une bague d'étanchéité d'ailette de chauffage (303) et une bague d'étanchéité (306) pour une entrée d'eau d'une pompe à eau CC à haute tension et une bague d'étanchéité (304) pour un capteur de température sont en outre prévues sur le support d'ailette de chauffage (305).

4. Cafetière montée sur véhicule avec une fonction de chauffage et une fonction d'extraction à haute tension selon une quelconque des revendications 1 à 3, dans laquelle l'ensemble de base d'infusion comprend un support de capsule (601), une aiguille de ponction (602), une boîte à poudre (603), une bague d'étanchéité anti-adhérente (604), une bague d'étanchéité (506) pour le porte-capsule et une base d'infusion (606); et une cavité capable de recevoir une capsule de café (607) est prévue à l'intérieur du porte-capsule, et une ouverture est formée sous la cavité; une entrée d'eau communiquant avec la cavité est formée sur le dessus du porte-capsule; l'aiguille de ponction est fixée sur le dessus de la cavité par une boucle; la bague d'étanchéité pour le porte-capsule est disposée à l'intérieur du porte-capsule; la boîte à poudre est disposée sous le porte-capsule; la bague d'étanchéité anti-adhérente est montée sur le fond de la boîte à poudre; et la base d'infusion est disposée sous la boîte à poudre.

5. Cafetière montée sur véhicule avec une fonction de chauffage et une fonction d'extraction à haute tension selon une quelconque des revendications 1 à 4, dans laquelle un bouton de commutation (502) est prévu sur la coque (501); la base de connexion (504) est prévue sur le fond de la coque; et le haut de la base de connexion (504) en raccord fileté avec le support de la pompe à eau inférieure (402) tandis que sa partie inférieure est en raccord fileté avec la base de brassage (606).

6. Cafetière montée sur véhicule avec une fonction de chauffage et une fonction d'extraction à haute tension selon une quelconque des revendications 1 à 5, dans laquelle l'ailette de chauffage (302) est une ailette de chauffage à couche épaisse de terre rare.

7. Cafetière montée sur véhicule avec une fonction de chauffage et une fonction d'extraction à haute tension selon une quelconque des revendications 1 à 6, dans laquelle la pompe à eau CC à haute tension (404) est une pompe à eau CC à haute tension à 12V.
